# EUROPEAN PATENT SPECIFICATION

(11) **EP 4 434 827 B1**
(45) Date of publication and mention of the grant of the patent: **15.07.2026**
(21) Application number: 24185095.7
(22) Date of filing: 04.08.2021
(51) Int. Cl.: B60T 8/32, B60T 8/17, B60T 8/36, B60T 13/66, B60T 13/68

(54) **A BRAKING SYSTEM**
BREMSSYSTEM
SYSTÈME DE FREINAGE

(30) Priority: 04.08.2020 GB 202012096
(43) Date of publication of application: 25.09.2024
(62) Divisional of application: 21189593.3
(73) Proprietor: Haldex Brake Products AB, 26124 Landskrona (SE)
(72) Inventor: HARRISON, Dudley, Warwickshire, CV13 6DE (GB)
(74) Representative: Forresters IP LLP

(56) References cited:
- EP-A2- 0 754 609
- GB-A- 2 384 838

## Description

The present invention relates to a valve for a braking system. It relates more specifically to a brake valve of a braking system for a trailer of a vehicle.

Braking systems are well known in the heavy vehicle industry. Typically, a vehicle includes a towing vehicle which has a braking system and a trailer (which is coupled to the towing vehicle) which has its own braking system. The trailer braking system connects to the system on the towing vehicle so that it can be controlled by the driver of the vehicle when travelling.

The trailer typically has two or more axles, each carrying at least a wheel on opposing sides of each axle. Each wheel has its own associated brake actuator, so that each wheel on the trailer can be braked. It is known to provide more than one controlling unit (usually known as a modulator) so that different wheels can be braked independently of each other. Usually multiple modulators are associated with different sides of the vehicle - i.e. so that the left side wheels of the trailer may be braked independently of the right side wheels.

GB2384838 discloses an anti-lock braking system for a commercial road vehicle trailer including compressed air brakes and a self-steer axle with such brakes and an ECU. The ECU selectively controls respective brake pressures to each side of another braking axle according to differential rolling surface adhesion to reduce skidding by way of respective pressure modulators. Further, the output pressures from these modulators are also applied to the brake actuators of the wheels of the self-steer axle. EP0754609 discloses an anti-skid brake system for a self-steer trailer vehicle having two or more wheel carrying axles, where at least one axle has self-steer means. When the vehicle is cornering, reaction forces between the ground and the wheels carried by the axle causes pivotal movement of the wheels about a steering axis.

The present invention seeks to alleviate one or more problems associated with prior known braking systems.

According to an aspect of the invention we provide a valve for a braking system having: first and second stage chambers configured such that an output from the first stage chamber controls the pressure output from the second stage chamber, first, second and third input ports for connection to a first, second and third source of fluid, respectively, the first and second inputs connecting to the first stage chamber and the third input connecting to the second stage chamber, and characterised by including first and second control ports for connection to the first and second source of fluid and both connecting to the first stage chamber, a delivery port, for connection to one or more brake actuators, and an exhaust, both the delivery port and exhaust connecting to the second stage chamber, wherein the first stage chamber has two states, in the first state, the first source of fluid is fluidly connected to the second stage chamber and in the second state, the second source of fluid is fluidly connected to the second stage chamber, and the state of the first stage chamber being controlled by the pressure present at the first and second control port, and wherein the second stage chamber is configured to fluidly connect the third source of fluid to the delivery port, depending on the pressure of the output from the first stage chamber.

Further optional features of the invention are set out in the appended claims. Optional features recited with respect to the first aspect of the invention may also be combined with the second or third aspect.

Embodiments of the present invention are described below with reference to the appended figures, of which:
Figure 1 is a schematic illustration of a trailer according to an embodiment;
Figure 2 is a schematic illustration of a valve system according to an embodiment;
Figure 3 is an illustration of brake pressures over a time period;
Figure 4 is an illustration of brake pressures over a time period; and
Figure 5 is an illustration of brake pressures over a time period.

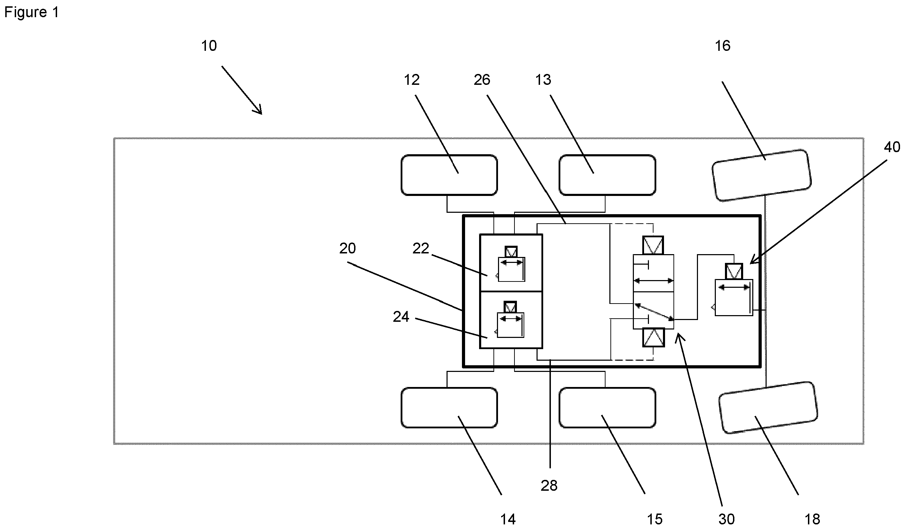

Figure 1 shows a trailer 10 of the type which is hooked up to a towing vehicle for travel. The braking system is operated using a pneumatic system and relies on the provision of fluid / air sources to apply brakes to wheels.

The trailer 10 has at least a first axle and a second axle and four ground engaging wheels. The first axle supports a first wheel 12 and a second wheel 14 on opposing sides and the second axle supports a third wheel 16 and a fourth wheel 18 on its opposing sides. Each wheel 12, 14, 16, 18 has its own associated brake actuator (so that a brake can be applied to each and every wheel).

In some embodiments, the trailer 10 may include one or more further axles each having a wheel at either end of the respective axle. For example, the trailer 10 illustrated in figure 1 has an additional axle (a third axle) which supports fifth and sixth wheels 13, 15 on opposing sides of the axle. It should be appreciated that the described braking system could be applied to a trailer 10 with any number of axles.

In some embodiments, the second axle is a self-steering axle. In other words, the second axle is not rigidly connected to the trailer and can turn in the same direction as the trailer 10 in order to improve the turning circle. The second axle is able to steer by using "adhesion steering". This uses the load on the axle and the adhesion of the wheels on the road surface to turn the axle in the direction of the curve that the vehicle is turning.

The trailer 10 has a braking system for braking the wheels 12, 14, 16, 18. The braking system includes a control system 20 for controlling braking of the trailer 10 (i.e. an electronic braking system (EBS)). For example, the control system 20 may receive electronic signals from the towing vehicle relating to demanded braking pressures, may receive signals from various sensors about conditions on the trailer (e.g. information from wheel speed sensors and/or sensors for assessing the stability of the trailer 10 on a road surface and/or pressure sensors delivering information about the pressure built in different parts of the system), and controls valves used for delivering brake pressure to the respective brake actuators for the wheels 12, 14, 16, 18.

The control system 20 controls a first braking valve system 22 which is for supplying a first pressure to the brake actuator of the first wheel 12. The control system 20 controls a second braking valve system 24 which is for supplying a second pressure to the brake actuator to the second wheel 14. The control system 20 also includes a second axle valve system 25 which is for supplying pressure to the brake actuators of the third and fourth wheels 16, 18.

The first braking system 22 includes a modulator valve and a relay valve (the modulator valve may be a combination of solenoid valves which modulate the pressure going to the control side/port of the relay valve). When the control system 20 signals to the first braking system 22 that brake pressure should be applied the modulator valve operates to build the required pressure. The pressure passes to the control of the relay valve and the relay valve is connected to a supply of pressurised fluid, so that the control pressure is output from the supply and delivered to the brake actuators of the first wheel 12.

The second braking valve system 24 is constructed in the same way as the first braking valve system 22, so that it can deliver the required pressure to the brake actuator of the second wheel 14.

The control system 20 is operable to control the first braking valve system 22 independently from the second braking valve system 24. Thus, the brake actuators of the first and second wheels 12, 14 are independently operable.

The trailer 10 has a "two / dual channel" system. In embodiments, the first braking valve system 22 is arranged to control one or more brake actuators on one side of the trailer (in figure 1, this is the right side of the trailer 10 - e.g. the first braking valve system 22 controls the brake pressure for the brake actuators at the first and fifth wheels 12, 13). In embodiments, the second braking valve system 24 is arranged to control one or more brake actuators on the second side of the trailer 10 - (in figure 1, this is the left side of the trailer 10 - e.g. the second braking valve system 24 controls the brake pressure for the brake actuators at the second and sixth wheels 14, 15).

In other words, the first braking valve system 22 controls the brake actuators on the right side of the trailer 10 and the second braking valve system 24 controls the brake actuators on the left side of the trailer 10. In some embodiments, the first and second braking valve systems 22, 24 are configured to control the brake actuators on axles which are not self-steering (i.e. are rigid with respect to the trailer 10). It should be appreciated that this corresponds to the first and third axles in figure 1 but could be the first axle only if the trailer 10 does not have multiple rigid axles.

The second axle valve system 25 outputs a third pressure, which goes to the brake actuators of the third and fourth wheels 16, 18. The third pressure is determined by the second axle valve system 25 by adopting the lowest of either the first pressure or the second pressure. In other words, the second axle valve system 25 has two inputs coming from the first and second braking valve systems 22, 24 respectively. The "dominant braking valve system" (at a specific point in time) is the one of the first and second braking valve system 22, 24 with the lowest pressure, and thus the pressure which dictates the third pressure output from the second axle valve system 25. Over time the first and second pressures will change and the one of the first and second pressures which is lower will also alternate. Thus, the dominant braking valve system will also alternate over time.

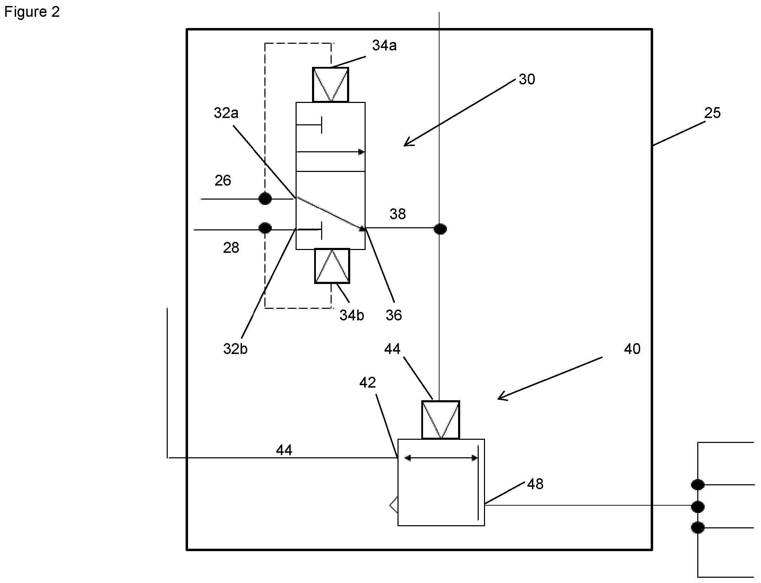

In the some embodiments, the second axle valve system 25 includes a select low relay valve (shown in detail in figure 2) which is a single component with inputs from the first and second braking valve systems 22, 24 and a pressurised fluid reservoir and outputs the required pressure (from the source of pressurised fluid) to the brake actuators for the third and fourth wheels 16, 18. Thus, the second axle valve system 25 controls the brake actuators of the third and fourth wheels 16, 18 together / in combination and not independently (which is unlike the operation of the brake actuators for the first and second wheels 12, 14).

The select low relay valve includes two parts - a select low part 30 (which forms a first stage chamber) and a relay part 40 (which forms a second stage chamber). The valve has first, second and third input ports for connections to a first, second and third source of fluid. The select low part 30 has two input ports 32a, 32b, two control ports 34a, 34b (the first and second control ports also connect to the first and second sources of fluid and control the first stage chamber) and a delivery port 36 (also the output to the second stage chamber). The relay part 40 has a supply port 42 (the third input to the select low relay valve), control port 44, delivery port 48 and exhaust. The supply port 42 is connected to a supply of pressurised fluid (for example, a reservoir). The control port 44 is connected directly to the output of the delivery port 36 of the select low part 30. In other words, the output from the first stage chamber controls the pressure output from the second stage chamber.

In effect the select low relay valve has three input ports - two for connection to each of the first and second braking valve systems 22, 24 and one for connection to a supply of pressurised fluid.

Thus, the delivered pressure from the select low part 30, to the control port 44, controls the supply of fluid out of the delivery port 48. The delivery port 48 is connected to the brake actuators of the third and fourth wheels 16, 18.

The select low relay valve is a single component capable of the described functionality (and may, for example, be formed in a single housing). Using a single component reduces the requirement for parts in the system.

In some embodiments, the input ports 32a, 32b and control ports 34a, 34b are connected to the first and second braking valve system 22, 24 respectively. For example, the first braking valve system 22 has an output line 26 which is connected to the first input port 32a and the second braking valve system 24 has an output line 28 which is connected to the second input port 32b. The output lines 26, 28 are also connected to the control ports 34a, 34b of the select low valve 30.

The select low part 30 has two states. In the first state, the first source of fluid flows through the first stage chamber to the second stage chamber. In other words, the output line 26 of the first braking valve system 22 flows through the first input port 32a select low part 30 to the delivery port 36 and the second input port 32b is closed.

In the second state, the second source of fluid flows through the first stage chamber to the second stage chamber. In other words, the output line 28 of the second braking valve system 24 flows through the second input port 32b of the select low part 30 to the delivery port 36 and the first input port 32a is closed.

The state of the first stage chamber is controlled by the pressure present at the first and second control port. In other words, the state of the select low part 30 is dictated by the pressures in the output lines 26, 28. The first stage chamber is in its first state when the pressure of the second source is higher than that of the first source. For example, if the pressure in line 28 (from the second braking valve system 24) is higher than the pressure in line 26 (from the first braking valve system 22), the control port 34b controls the state of the valve (and opens the first input port 32a). In this state, the first braking valve system 24 is the dominant braking valve system and the third pressure output by the second axle valve system 25 is dictated by the first pressure.

The first stage chamber is in its second state when the pressure of the first source is higher than that of the second source. For example, if the pressure in line 26 (from the first braking valve system 22) is higher than the pressure in line 28 (from the second braking valve system 24), the control port 34a controls the state of the valve (and opens the second input port 32b). Thus, the select low part 30 is configured to allow the lowest pressure from the first and second braking valve system 22, 24 to be delivered / output through the delivery port 36 to the relay part 40. For example, the output from the first stage chamber forms a control input for the second stage chamber. The pressure delivered from the delivery port 48 is substantially the same as / proportional to the pressure arriving at the control port 44. In other words, the control port 44 pressure controls the delivery pressure and the two pressures will be proportional to one another. In this state, the second braking valve system 24 is the dominant braking valve system and the third pressure output by the second axle valve system 25 is dictated by the second pressure.

Optionally, the relay part 40 may have additional connectivity provided in the form of an "extension" of the connection to the control port 44. This allows the select low relay valve to be used in many different environments. In other words, the additional control line allows the select low valve to be used in situations that do not necessarily need select low functionality (e.g. an environment that requires only relay boost functionality). It should be appreciated that there are multiple uses for the additional control port, for example, it could signal another system or could be used as a test port. Thus, the select low relay valve is usable in many more locations in a braking system than the one discussed here.

It should be appreciated that the same braking functionality can be achieved using a separate select low valve and relay valve connected in series to operate the second axle as desired (this option is not illustrated). However, this option relies on more pipe connections and more individual components being used. The option of a select low relay valve is preferred due to the reduction in pipe connections and individual components required.

In some embodiments, the second axle valve system 25 could include two such select low relay valves, one for each of the third and fourth wheels 16, 18 (or a select low relay valve for each side of the axles being controlled in this way). Since the select low relay valve(s) is slaved to the operation of the first and second braking valve systems 22, 24 (i.e. it is completely controlled by the outputs of the first and second braking valve systems 22, 24), it may not be preferred.

It should be appreciated that, for trailers that have many axles (more than generally described here), additional relay functionality may be necessary to avoid too many brake actuators being operated by a single valve system. In such a case, additional select low relay valves may be necessary as discussed above or the relay part of a select low relay valve may be used to aid operation of those many brake actuators.

In some embodiments, particularly in trailers with many axles (again more than generally described here), the second axle valve system may operate on each side of the trailer, individually. In other words, a select low relay valve may take input from two braking valve systems on the same side of the vehicle and select between them for the same side of the trailer but for other, later, axles. In that case, a second select low relay valve may take two inputs from the opposing side and control that same (opposing) side for the other axles. It should be appreciated that such a system is only envisaged for trailers with many axles (non-steering and self-steering).

In some embodiments, the second axle valve system 25 controls the brake pressure going to the brake actuators of all the self-steering axles (which in the presently illustrated case is just the second axle and the third and fourth wheels 16, 18). There may be more than one self-steering axle, each of which may be controlled by the output from the second axle valve system 25. In such an embodiment, the second axle valve system 25 illustrated in the figure 2 may be used to control additional axles by using a connector / adaptor that provides multiple outputs that can be connected to each respective brake actuator, as required.

How the system operates will now be discussed. During operation of the vehicle, the brakes will be applied at various times as a result of the driver requesting braking through a braking pedal or perhaps as a result of an intervention from a stability control system. As discussed above, braking force is provided by each brake actuator associated with its respective wheel.

The ABS monitors the wheel speed of one or more individual wheels 12, 13, 14, 15, 16, 18 of the trailer 10. In the illustrated case, the ABS monitors the wheel speed of at least one wheel on each side of the trailer 10 (so that the conditions on the left and right of the trailer 10 can be monitored independently - this is a dual channel ABS). The ABS detects wheel slip (i.e. a non-continuous or sudden drop in wheel rotation) and intervenes to stop the slipping. The sudden reduction in wheel speed indicates that the wheel is slipping on the ground surface it is travelling on or other effect. The ABS causes the pressure at the respective brake actuator to be reduced for a short period of time.

During braking the control system 20 both controls the braking pressures applied by signalling to the first and second braking valve system 22, 24 and monitors and / or stores the braking forces being applied. In the presently described system, the control system 20 is operable to control the difference between the first pressure in or output by the first braking valve system 22 and the second pressure in or output by the second braking valve system 24 (this threshold placed on the difference permitted is called an synchronisation threshold).

In some embodiments, the control system 20 is configured to control the difference between the first pressure and the second pressure when specific criteria are met. The control system 20 is operable to monitor the first and second pressures (for example, via the pressure demand signals going to the first and second braking valve systems 22, 24 or via a pressure sensor monitoring the pressure developed at the output of the first and second braking valve systems and / or at the brake actuators of the first and second wheels 12, 14).

In some embodiments, the criteria may be satisfied when the dominant braking valve system changes. By this we mean that the dominant braking valve system swaps from the first to the second or vice versa (not that some state inside the respective braking valve system has altered).

The control system 20 is configured to implement the synchronisation threshold to limit the difference between the first and second pressures. In some embodiments, the synchronisation threshold is applied by tying one of the first and second pressures to the other, so that the difference in pressure between them cannot increase past the threshold level.

The control system 20 may achieve this by setting the newly dominant braking valve system (i.e. the braking system that drops pressure and starts the synchronisation threshold process) as the reference system. The reference system then forms the pressure baseline to which the other of the first and second braking valve system 22, 24 is bound to follow. In other words, the one of the first and second braking valve system 22, 24 that is not the reference system cannot deviate (in pressure) more than the synchronisation threshold from the reference system.

In some embodiments, even if the dominant braking valve system changes after the synchronisation threshold has been implemented, the reference system remains constant. Thus, the reference system may not always be the dominant braking valve system.

In some embodiments, the control system 20 monitors the first and second pressures after the synchronisation threshold has been implemented for further switching / alternating of the dominant braking valve system. In other words, the control system 20 assesses whether the lowest pressure is switching from the first pressure to the second pressure or vice versa on an ongoing basis / constantly over time.

In some embodiments, the control system 20 implements the synchronisation threshold when the dominant braking valve system has changed and the pressure in that "newly" dominant braking valve system has dropped below the other braking valve system by at least a predetermined amount (hereinafter referred to as an implementation margin).

In some embodiments, the implementation margin is around 50 kPa. However, it should be appreciated that the control system 20 can resolve changes in pressure from about 5 kPa (i.e. that is the sensitivity of the system) and, so the values that are preprogramed may be above 5 kPa, as desired. In the case of the implementation margin, for example, the value may be between 30 kPa and 70 kPa.

In some embodiments, the synchronisation threshold is about 30 kPa. It should be appreciated that the synchronisation threshold can be altered as desired (for example, it may be between 10 kPa and 50 kPa).

In some embodiments, if the dominant braking valve system does not switch / change for a predetermined amount of time then the control system 20 allows the first and second pressures to diverge (i.e. the synchronisation threshold may increase). In other words, the control system 20 implements a strictest limit (i.e. where the synchronisation threshold is smallest), when the dominant braking valve system first switches (and if the dominant braking valve system continues to alternate as time progresses). In some embodiments, the control system 20 may continue to implement the smallest synchronisation threshold while the pressure from the dominant braking valve system continues to decrease (and/or while it remains constant).

However, if the control system 20 registers that the dominant braking valve system does not switch and / or the pressure from the dominant braking valve system increases, a "looser" synchronisation threshold may be implemented (i.e. the synchronisation threshold is altered). Further, the synchronisation threshold may, over time, increase (as long as the dominant braking valve system does not change). For example, the synchronisation threshold may increase continuously or in a stepwise way.

In some embodiments, the increase rate may be around 100 kPa per second. It should be appreciated that the rate of increase may be programed as desired.

In some embodiments, if the pressure from the dominant braking valve system subsequently decreases (i.e. the pressure drops after the initial increase to meet the criteria to increase the synchronisation threshold) the control system 20 is operable to reduce the rate of increase of the synchronisation threshold. For example the increase rate may be throttled at around 50% of the "standard" increase in synchronisation threshold permitted (in relation to the above described values, this may be around 50 kPa per second - i.e. 50% of 100 kPa).

After a set amount of time, there may no longer be any synchronisation threshold imposed if the dominant braking valve system does not change.

In some embodiments, the control system 20 is operable to implement a temporary ban or override on any new synchronisation threshold being implemented. For example, if the pressure in either of the first and second braking valve system 22, 24 is so low that little or no braking effect can be developed in the brake actuators, it may be undesired to implement a synchronisation threshold to bring the other of the first and second braking valve systems 22, 24 down in pressure to the same level (because then there would be very little braking across the entire axle / trailer 10). Thus, if either of the first and second pressures drops below a predetermined low pressure threshold (e.g. around 20 kPa) the control system 20 is be operable to prevent any synchronisation threshold being implemented (a "threshold override"). Therefore, when the control system 20 is operating the threshold override, it overrides any other criteria that may be met that would usually result in the implementation of a synchronisation threshold.

The threshold override may be in place for a predetermined amount of time (e.g. around 500ms). The threshold override may, in addition to stopping a new synchronisation threshold from being implemented, also stop the designation / allocation of a new reference system.

The threshold override has the effect of allowing the control system 20 to apply the brakes either in the first or second braking valve systems 22, 24, wherever traction can be found on the road surface. This means that in difficult braking conditions (i.e. those in which there is very little frictional engagement between the wheels and the ground on one or both sides of the vehicle, e.g. when travelling on ice) the system can enter an "emergency mode" which enables the control system 20 to continue to operate the first and second braking valve systems 22, 24 independently to achieve maximum braking possible (even if that braking is on only one side of the trailer 10).

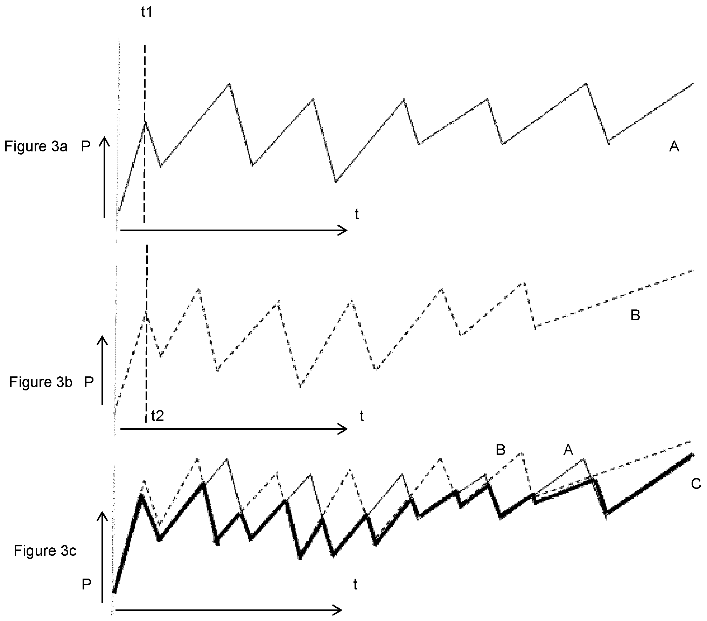

Examples of how the control system may implement this operation are described below with the aid of figures 3 to 5.

Figures 3a - 3c illustrate an example case where the control system 20 does not limit the difference in pressures between the left and right sides of the trailer 10 (the first and second braking valve system 22, 24) at all and the outgoing pressure delivered to the brake actuators of the third and fourth wheels 16, 18.

Figure 3a shows an example braking pressure on one side of the trailer 10. Line "A" is an example of the pressure over time t experienced on the right side of the trailer 10. Figure 3b shows an example braking pressure on the second side of the trailer 10. Line "B" is an example of the pressure over time t experienced on the left side of the trailer 10. As can be seen, when the ABS is implemented (or other brake performance effect) on the right side of the trailer 10 (at t1), the pressure drops sharply and then increase again. Likewise, the brake pressure drops sharply on the left side (at t2) and the rises again. Thus, the brake pressures on both sides of the trailer 10 cycle through peaks and troughs. In this case, the cycling effect on the right of the trailer 10 is independent of the cycling effect on the left of the trailer 10.

Figure 3c shows the outputs from the left and right sides (figure 3a and 3b) superposed on each other. The output that would go through the second axle valve system 25 (and to the brake actuators for the third and fourth wheels 16, 18) is shown by the bold line "C". As can be seen, line C follows / corresponds to the lowest pressure of the left and right sides. As the cycles of the two sides are out of sync with each other, the pressure output is consistently low (i.e. always picks up a trough of the left and right sides because they are out of phase).

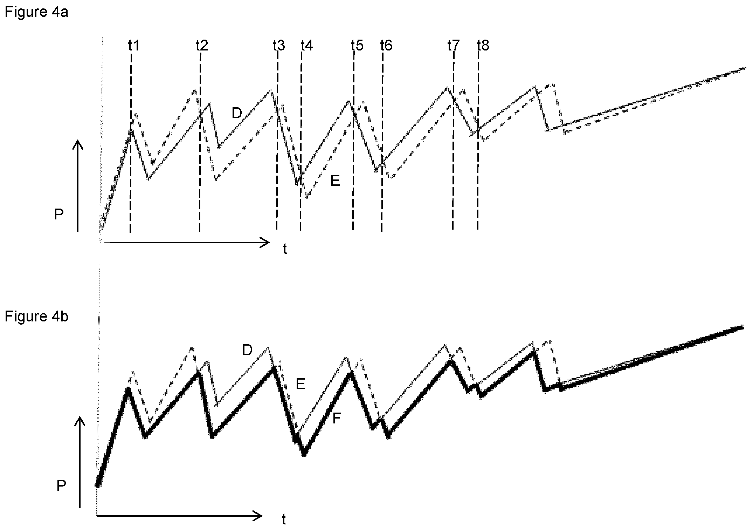

Figures 4a to 5b illustrate an example case where the control system 20 implements a limit on difference in pressure between the left and right sides of the trailer 10. Figure 4a shows example output pressure from the first and second braking valve systems 22, 24. Line "D" (solid line) is an example of the pressure over time t at / from the first braking valve system 22 (i.e. the first pressure over time t) and line "E" (dashed line) is an example of the pressure over time t at / from the second braking valve system 24 (i.e. the second pressure over time t).

Figure 4b shows the pressure from the second axle valve system 25 (i.e. the third pressure) in line "F" (bold line). As can be seen, the line F follows the lowest of either line D or line E.

At time t1, the pressure from the first braking valve system 22 (line D) drops rather than continuing to rise in line with the pressure in the second braking valve system 24. Thus, at time t1 the control system 20 determines that the dominant braking valve system is the first braking valve system 22. The control system 20 also determines that the third pressure corresponds to the first pressure.

The drop in the first pressure may be caused by differences in brake performance between the two sides of the trailer 10 and/or by the wheels on that side of the trailer 10 having different adhesion on the ground surface (and an ABS induced pressure drop is initiated).

At time t2, the pressure from the second braking valve system 24 drops below the pressure from the first braking valve system 22. At t2, the dominant braking valve system changes (this can be seen from line F on figure 4b). Again, the control system 20 determines that there has been a change in the dominant braking valve system. The control system 20 implements a limit on the difference permitted between the first and second braking valve system 22, 24 because the dominant braking valve system has switched form the first braking valve system 22 to the second braking valve system 24.

In some embodiments, the control system 20 continues to impose the threshold on the difference between the pressures from the first and second braking valve systems 22, 24 while the dominant braking valve system is unstable. For example, in figure 4a and 4b the two pressures from the first and second braking valve systems 22, 24 continue to switch back and forth over time (see t3 to t8 in figure 4a), so the control system 20 ensures that neither one of the first and second pressure can diverge from the other one.

The effect of the synchronisation threshold means that the first and second pressures in the first and second braking systems 22, 24 are forced to cycle between peaks and troughs together. In other words, the first and second pressures are forced to cycle "in phase" with each other - e.g. when viewed on a graph of the pressure of time, the first and second pressures approach 0 degrees apart. Since the control system 20 forces one of the first and second pressures to follow the other, it is unlikely that the two pressures will ever be completely in phase.

Without the synchronisation threshold being implemented (the situation in figure 3a to 3c), the pressure in the first and second braking valve systems 22, 24 cycles independently and, therefore, the peaks and troughs do not follow at the same time. In other words, the first and second pressures cycle "out of phase" with each other and / or randomly with respect to each other - when viewed on a graph showing the pressure over time, the first and second pressures are closer to 180 degrees phasing and / or the degrees apart will randomly change over time.

The impact of the cycle phasing is felt in the second axle valve system 25 (and, therefore, the brake performance of the brake actuators for the third and fourth wheels 16, 18). If the pressures of the first and second braking valve systems 22, 24 are in phase with each other, the pressure to the second axle valve system 25 will cycle between peak and trough (because both the first and second braking systems 22, 24 cycle between peak and trough substantially together / in phase with each other). This maximises the pressure output (third pressure) of the second axle valve system 25, over time, and, thus, maximises the brake application / performance of the brake actuators of the third and fourth wheels 16, 18.

Contrarily, if the first and second braking valve system pressures are out of phase with each other, then the pressure to the second axle valve system 25 is more often in the trough of one of the cycles of the first and second braking valve systems 22, 24. This results in lower brake application / performance to the brake actuators of the third and fourth wheels 16, 18 (as can be seen in figure 3c).

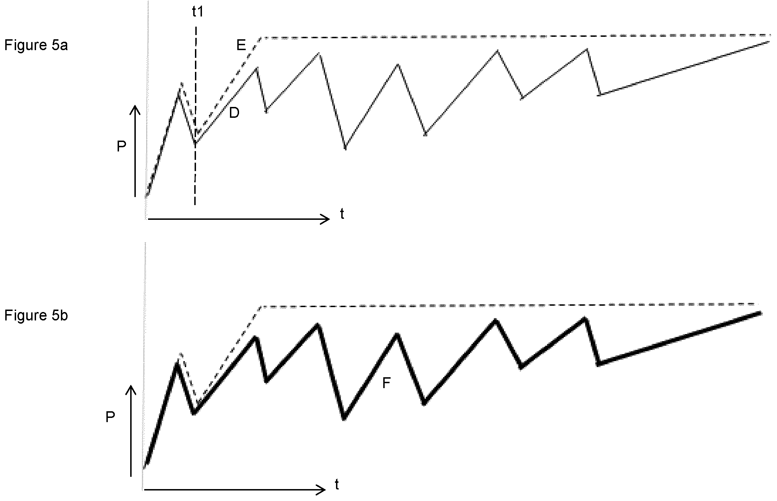

Figures 5a and 5b illustrates the process at the end of synchronisation threshold as the threshold is loosened. The example pressure at / from the first braking valve system 22 is line D (the solid line) and the output from the second braking valve system 24 is line E (the dashed line), which is shown in figure 5a.

As discussed above, in some embodiments, when the control system 20 detects no alternating between the dominant braking valve system, the synchronisation threshold is loosened. In some example systems, the synchronisation threshold is only altered / increased when the pressure from the dominant braking valve system is not decreasing / increases. The synchronisation threshold is increased at a pre-programmed / predetermined rate.

In figure 5a, for example, the second braking valve system pressure (line E) does not drop below the pressure of the first braking valve system 22 (line D) and because the pressure in the dominant braking valve system (the first braking valve system 22 in the illustrated case) increase, the control system 20 increases the synchronisation threshold (at time t1). As can be seen, the second pressure (in the second braking valve system 24) is permitted to increase away from the first pressure (in the first braking valve system 22), which continues to cycle through peaks and troughs in pressure.

The increase could be altered depending on the specific environment in which the trailer is travelling - for example, it could depend on the level of wheel slip detected on each side of the trailer 10 at the point in time that the synchronisation threshold is being altered / increased. For example, the control system 20 may increase the predetermined rate of alteration of the synchronisation threshold if there is no wheel slip (or wheel slip is below a predetermined amount). Alternatively, the control system 20 may decrease the predetermined rate of alteration of the synchronisation threshold if wheel slip is detected (or wheel slip is above a predetermined value).

In some embodiments, once the synchronisation threshold has been increased, so that it no longer has an impact on the first and second pressures, the first and second braking valve systems 22, 24 may operate independently. This is also the case before the synchronisation threshold has been implemented. In essence as long as the dominant braking valve system does not change / is not changing, the control system 20 controls the first and second braking valve system 22, 24 independently of each other.

In reality, the two examples outlined in figure 4 and 5 may be caused by different situations experienced by the trailer 10 (or a mix of situations). Continuous troughs and peak cycles in both the first and second pressures may be a result of differences in brake performance. Whereas, if the first and second pressures are different to each other (i.e. one of the braking valve systems 22, 24 is cycling and the other is not), this may more likely be as a result of one side of the trailer 10 having better / finding better frictional contact with the ground surface than the other.

## Claims

1. A valve (25) for a braking system having:
first and second stage chambers (30, 40) configured such that an output from the first stage chamber controls the pressure output from the second stage chamber,
first, second and third input ports (32a, 32b, 42) for connection to a first, second and third source of fluid (26, 28, 44), respectively, the first and second inputs (32a, 32b) connecting to the first stage chamber (30) and the third input (42) connecting to the second stage chamber (40), and **characterised by** including:
first and second control ports (34a, 34b) for connection to the first and second source of fluid (26, 28) and both connecting to the first stage chamber (30),
a delivery port (48), for connection to one or more brake actuators, and an exhaust, both the delivery port (48) and exhaust connecting to the second stage chamber (40),
wherein the first stage chamber (30) has two states, in the first state, the first source of fluid (26) is fluidly connected to the second stage chamber (40) and in the second state, the second source of fluid (28) is fluidly connected to the second stage chamber (40), and the state of the first stage chamber (30) being controlled by the pressure present at the first and second control port (34a, 34b), and
wherein the second stage chamber (40) is configured to fluidly connect the third source of fluid (44) to the delivery port (48), depending on the pressure of the output (38) from the first stage chamber (30).

2. A valve (25) according to claim 1 wherein the second stage chamber (40) has a control input (44) and the output (38) from the first stage chamber (30) connects to the control input (44).

3. A valve (25) according to claim 2 wherein the control input (44) of the second stage chamber (40) is connectable to a further control source.

4. A valve (25) according to any one of the preceding claims wherein the first stage chamber (30) is in its first state when the pressure of the second source (28) is higher than that of the first source (26) and is in its second state when the pressure of the first source (26) is higher than that of the second source (28).

5. A valve (25) according to any one of the preceding claims wherein the pressure delivered from the delivery port (48) is substantially the same as the pressure arriving at the second stage chamber (40) from the first stage chamber (30).

## Patentansprüche

1. Ventil (25) für ein Bremssystem mit:
Kammern (30, 40) erster und zweiter Stufe, die so konfiguriert sind, dass ein Output der Kammer erster Stufe den Druckoutput der Kammer der zweiten Stufe steuert,
ersten, zweiten und dritten Eingangsanschlüsse (32a, 32b, 42) zum Anschluss an eine erste, zweite bzw. dritte Fluidquelle (26, 28, 44), wobei der erste und zweite Eingang (32a, 32b) mit der Kammer (30) der ersten Stufe und der dritte Eingang (42) mit der Kammer (40) der zweiten Stufe verbunden sind, und **gekennzeichnet durch** einschließlich:
Erster und zweiter Steueranschlüsse (34a, 34b) zum Anschluss an die erste und zweite Fluidquelle (26, 28), wobei beide mit der Kammer (30) der ersten Stufe verbunden sind,
eines Druckanschlusses (48) zum Anschließen an einen oder mehrere Bremsaktuatoren und ein Abgasrohr, wobei sowohl der Druckanschluss (48) als auch das Abgasrohr mit der Kammer (40) der zweiten Stufe verbunden sind,
wobei die Kammer (30) erster Stufe zwei Zustände aufweist, wobei im ersten Zustand die erste Fluidquelle (26) fluidisch mit der Kammer (40) zweiter Stufe verbunden ist und im zweiten Zustand die zweite Fluidquelle (28) fluidisch mit der Kammer (40) zweiter Stufe verbunden ist, und wobei der Zustand der Kammer (30) erster Stufe durch den Druck gesteuert wird, der an den ersten und zweiten Steueranschlüsse (34a, 34b) vorliegt, und
wobei die Kammer (40) zweiter Stufe so konfiguriert ist, dass sie die dritte Fluidquelle (44) fluidisch, abhängig vom Druck des Outputs (38) aus der Kammer (30) der ersten Stufe, mit dem Druckanschluss (48) verbindet.

2. Ventil (25) nach Anspruch 1, wobei die Kammer (40) der zweiten Stufe einen Steuereingang (44) aufweist und der Output (38) der Kammer (30) der ersten Stufe mit dem Steuereingang (44) verbunden ist.

3. Ventil (25) nach Anspruch 2, wobei der Steuereingang (44) der Kammer (40) zweiter Stufe mit einer weiteren Steuerquelle verbunden werden kann.

4. Ventil (25) nach irgendeinem der vorhergehenden Ansprüche, wobei sich die Kammer (30) erster Stufe im ersten Zustand befindet, wenn der Druck der zweiten Quelle (28) höher ist als der der ersten Quelle (26) ist und sich im zweiten Zustand befindet, wenn der Druck der ersten Quelle (26) höher als der der zweiten Quelle (28) ist.

5. Ventil (25) nach irgendeinem der vorhergehenden Ansprüche, wobei der aus dem Druckanschluss (48) abgegebene Druck im Wesentlichen dem Druck entspricht, der aus der Kammer (30) der ersten Stufe in die Kammer 40) der zweiten Stufe gelangt.

## Revendications

1. Soupape (25) pour un système de freinage, comprenant :
des première et seconde chambres d'étage (30, 40) configurées de telle sorte qu'une sortie de la première chambre d'étage commande la pression de sortie de la seconde chambre d'étage,
des premier, deuxième et troisième orifices d'entrée (32a, 32b, 42) destinés à être raccordés respectivement à des première, deuxième et troisième sources de fluide (26, 28, 44), les première et deuxième entrées (32a, 32b) étant raccordées à la première chambre d'étage (30) et la troisième entrée (42) étant raccordée à la seconde chambre d'étage (40), la soupape étant **caractérisée en ce qu'**elle comprend :
des premier et second orifices de commande (34a, 34b) destinés à être raccordés aux première et deuxième sources de fluide (26, 28) et communiquant l'un et l'autre avec la première chambre d'étage (30),
un orifice de distribution (48) destiné à être raccordé à un ou plusieurs actionneurs de frein, et un échappement, l'orifice de distribution (48) et l'échappement étant l'un et l'autre raccordés à la seconde chambre d'étage (40),
la première chambre d'étage (30) présentant deux états : dans le premier état, la première source de fluide (26) étant reliée par fluide à la seconde chambre d'étage (40) et, dans le second état, la deuxième source de fluide (28) étant reliée par fluide à la seconde chambre d'étage (40), l'état de la première chambre d'étage (30) étant commandé par la pression présente au niveau des premier et second orifices de commande (34a, 34b), et
la seconde chambre d'étage (40) étant configurée pour relier par fluide la troisième source de fluide (44) à l'orifice de distribution (48), en fonction de la pression de la sortie (38) de la première chambre d'étage (30).

2. Soupape (25) selon la revendication 1, la seconde chambre d'étage (40) comportant une entrée de commande (44), et la sortie (38) de la première chambre d'étage (30) étant reliée à l'entrée de commande (44).

3. Soupape (25) selon la revendication 2, l'entrée de commande (44) de la seconde chambre d'étage (40) pouvant être reliée à une autre source de commande.

4. Soupape (25) selon l'une quelconque des revendications précédentes, la première chambre d'étage (30) étant dans son premier état lorsque la pression de la deuxième source (28) est supérieure à celle de la première source (26) et dans son second état lorsque la pression de la première source (26) est supérieure à celle de la deuxième source (28).

5. Soupape (25) selon l'une quelconque des revendications précédentes, la pression distribuée par l'orifice de distribution (48) étant sensiblement identique à la pression arrivant au niveau de la seconde chambre d'étage (40) en provenance de la première chambre d'étage (30).
